# DEMANDE DE BREVET EUROPEEN

(11) **EP 3 537 600 A1**
(43) Date de publication de la demande: **11.09.2019**
(21) Numéro de dépôt: 19161437.9
(22) Date de dépôt: 07.03.2019
(51) Int. Cl.: H02P 27/08, H02M 7/5387

(54) **ARCHITECTURE ÉLECTRIQUE DE PILOTAGE DE CONVERTISSEURS ET AÉRONEF COMPRENANT L'ARCHITECTURE**

(30) Priorité: 08.03.2018 FR 1800200
(71) Demandeur: Thales, 92400 Courbevoie (FR)
(72) Inventeur: LACAUX, Frédéric, 78401 CHATOU Cedex (FR); GUGUEN, Stéphane, 78401 CHATOU Cedex (FR); DEVAUTOUR, Joël, 78401 CHATOU Cedex (FR)
(74) Mandataire: Collet, Alain

(57) **Abrégé**

L'invention concerne une architecture électrique de pilotage d'onduleurs et un aéronef comprenant l'architecture. L'architecture électrique, comprend : plusieurs convertisseurs pouvant fonctionner indépendamment les uns des autres, chaque convertisseur étant destiné à alimenter une charge, associé à chaque couple convertisseur/charge : une boucle de charge, comprenant au moins un capteur mesurant un paramètre caractéristique du fonctionnement de la charge, un module d'asservissement de fonctionnement, recevant une consigne de fonctionnement de la charge et une information provenant du capteur de fonctionnement, le module d'asservissement de fonctionnement asservissant une consigne en courant du convertisseur considéré pour que l'information issue du capteur de fonctionnement suive la consigne de fonctionnement. Selon l'invention, le module d'asservissement de fonctionnement est commun aux convertisseurs.

## Description

### Domaine technique de l'invention

L'invention concerne une architecture électrique de pilotage d'onduleurs. L'invention est bien adaptée à un réseau électrique embarqué à bord d'un véhicule. L'invention trouve une utilité particulière dans le domaine aéronautique où la tendance actuelle est d'augmenter le nombre d'équipements électriques et donc la puissance électrique embarquée.

### Arrière plan technologique de l'invention

Un avion comprend généralement un grand nombre de charges électriques alimentées en puissance électrique par un réseau de fourniture électrique de bord. Par exemple, les commandes de vols de l'avion, les systèmes de climatisation et d'éclairage interne mettent en oeuvre des machines électriques alternatives triphasées. L'énergie électrique fournie à ces machines provient de convertisseurs de puissance reliés à un réseau de bord délivrant de l'énergie électrique sous forme continue ou alternative. Le réseau de bord peut comprendre par exemple des générateurs électriques, des batteries de stockage, ou encore des moyens de liaison à un réseau d'alimentation électrique externe à l'avion et permettant l'alimentation électrique de l'avion lorsqu'il est stationné dans un aéroport. De façon courante à bord d'avion, on trouve des réseaux continus 540V et/ou des réseaux alternatifs 115V ou 230V 400Hz. De manière connue, les convertisseurs de puissance reçoivent de l'énergie du réseau de bord pour la convertir en énergie alternative polyphasée adaptée aux exigences en puissance et en fréquence de la charge. Lorsqu'un convertisseur est alimenté par un réseau alternatif, le convertisseur comprend par exemple un redresseur délivrant une tension continue suivi d'un onduleur produisant la tension alternative nécessaire à la charge à partir de la tension continue. Lorsqu'un convertisseur est alimenté par un réseau continu, le convertisseur comprend alors un circuit remplissant la fonction d'onduleur et produisant la tension alternative directement à partir de la tension continue du réseau de bord. Un convertisseur peut être dédié à une charge ou commun à plusieurs charges.

Les convertisseurs comprennent généralement des interrupteurs électroniques couplant le réseau de bord aux différentes phases alimentant la charge. Les interrupteurs électroniques sont par exemple transistors à effet de champ à grille isolée couramment appelés MOSFET pour leur abréviation anglo-saxonne (Metal Oxide Semiconductor Field Effect Transistor). On trouve également des transistors bipolaires à grille isolée couramment appelés IGBT, pour leur abréviation anglo-saxonne (Insulated Gâte Bipolar Transistor).

L'invention s'intéresse au pilotage des interrupteurs appartenant aux convertisseurs. L'invention peut être mise en oeuvre quel que soit le type de conversion d'énergie. Le convertisseur peut être alimenté par un réseau alternatif ou continu. Le convertisseur peut délivrer une tension alternative ou continue. Le convertisseur peut être monodirectionnel ou réversible.

A ce jour, associé à chaque convertisseur, on retrouve un équipement électronique permettant de le piloter. Cet équipement reçoit une consigne de fonctionnement de la charge alimentée par le convertisseur et délivre des signaux alimentant directement les grilles des différents interrupteurs du convertisseur. Pour une charge telle qu'un moteur électrique, la consigne de fonctionnement peut par exemple être la vitesse de rotation du moteur ou le couple qu'il doit délivrer.

Dans de nombreux véhicules et plus particulièrement pour les avions, la réduction de masse embarquée est un problème récurrent qui se pose. On a par exemple tenté de mutualiser les convertisseurs. Cette mutualisation est par exemple décrite dans la demande de brevet WO2007/113312 déposée au nom de la demanderesse. Dans ce document, un même convertisseur peut être utilisé pour alimenter différentes charges. Un système d'aiguillage permet d'affecter un ou plusieurs convertisseurs à une charge ou à une autre en fonction du besoin instantané en puissance des différentes charges.

### Résumé de l'invention

L'invention s'inscrit aussi dans la recherche de réduction des masses embarquées. A cet effet, l'invention propose de s'intéresser à l'équipement de pilotage des convertisseurs et en mutualisant tout ou partie. Plus précisément, l'équipement de pilotage comprend une chaîne fonctionnelle à laquelle l'invention s'intéresse. Cette chaîne est composée de plusieurs modules. L'invention propose de mutualiser certains modules tout en conservant d'autres modules dédiés à l'onduleur.

A cet effet, l'invention a pour objet une architecture électrique, comprenant :
- plusieurs convertisseurs pouvant fonctionner indépendamment les uns des autres, chaque convertisseur étant destiné à alimenter une charge,
- associé à chaque couple convertisseur/charge : une boucle de charge, comprenant au moins un capteur mesurant un paramètre caractéristique du fonctionnement de la charge, un module d'asservissement de fonctionnement, recevant une consigne de fonctionnement de la charge et une information provenant du capteur de fonctionnement, le module d'asservissement de fonctionnement asservissant une consigne en courant du convertisseur considéré pour que l'information issue du capteur de fonctionnement suive la consigne de fonctionnement,
caractérisée en ce que le module d'asservissement de fonctionnement est commun aux convertisseurs.

Le module d'asservissement de fonctionnement peut comprendre une mémoire permettant de stocker plusieurs lois de commande, chacune adaptée au fonctionnement de l'un des convertisseurs.

La mémoire peut être configurée pour stocker une courbe de charge adaptée à une batterie formant la charge associée au convertisseur.

La mémoire peut aussi être configurée pour stocker une courbe couple/vitesse adaptée à démarrer un moteur électrique formant la charge associée au convertisseur.

La mémoire peut également être configurée pour stocker des données de fonctionnement d'interrupteurs pilotés et/ou de la charge associée.

Le module commun aux différents convertisseurs peut comprendre un système d'exploitation temps réel assurant une ségrégation de canaux associés à chacun des convertisseurs.

L'architecture électrique peut comprendre en outre :
- associée à chaque convertisseur : une boucle de courant, comprenant au moins un capteur de courant mesurant un courant de sortie du convertisseur considéré, un module d'asservissement en courant, recevant la consigne en courant et une information provenant du capteur de courant et délivrant un rapport cyclique d'ouverture et de fermeture d'interrupteurs électroniques appartenant au convertisseur considéré, le module d'asservissement en courant asservissant le rapport cyclique pour qu'une information issue du capteur de courant suive la consigne en courant,
- un module de pilotage comprenant le module d'asservissement de fonctionnement et le module d'asservissement en courant, le module de pilotage étant commun aux convertisseurs.

L'architecture électrique peut comprendre en outre un modulateur de largeur d'impulsions commun aux convertisseurs, recevant un rapport cyclique et délivrant aux convertisseurs des ordres binaires d'ouverture et de fermeture d'interrupteurs électroniques des différents convertisseurs. Le module de pilotage commun aux convertisseurs comprend en outre le modulateur de largeur d'impulsions.

L'architecture électrique peut comprendre en outre, associé à chaque convertisseur, un module de commande des interrupteurs, appelé commande rapprochée, recevant les ordres binaires et réalisant une adaptation de courant et de tension des ordres binaires pour générer des signaux adaptés aux interrupteurs.

Une liaison reliant le module de pilotage et les commandes rapprochées peut être assurée au moyen de fibres optiques.

Le module d'asservissement de fonctionnement peut être disposé dans un boitier. Les convertisseurs sont alors disposés chacun dans un boitier distinct du boitier contenant le module d'asservissement de fonctionnement.

L'architecture électrique peut comprendre en outre au moins un contacteur distinct des convertisseurs. Le module d'asservissement de fonctionnement pilote alors le contacteur.

L'invention a également pour objet un aéronef, comprenant une architecture électrique selon l'invention. Le module d'asservissement de fonctionnement est alors disposé dans une zone pressurisée de l'aéronef et au moins un des convertisseurs est disposé dans une zone non pressurisée de l'aéronef.

### Brève description des figures

L'invention sera mieux comprise et d'autres avantages apparaîtront à la lecture de la description détaillée d'un mode de réalisation donné à titre d'exemple, description illustrée par le dessin joint dans lequel :
la figure 1 représente schématiquement un onduleur et son équipement de pilotage ;
les figures 2 et 3 représentent deux convertisseurs continu continu et leur équipement de pilotage ;
les figures 4, 5 et 6 représentent différents modes de réalisation de l'invention permettant une mutualisation de tout ou partie de l'équipement de pilotage décrit à l'aide des figures 1, 2 ou 3.

Par souci de clarté, les mêmes éléments porteront les mêmes repères dans les différentes figures.

### Description détaillée de différents modes de réalisation de l'invention

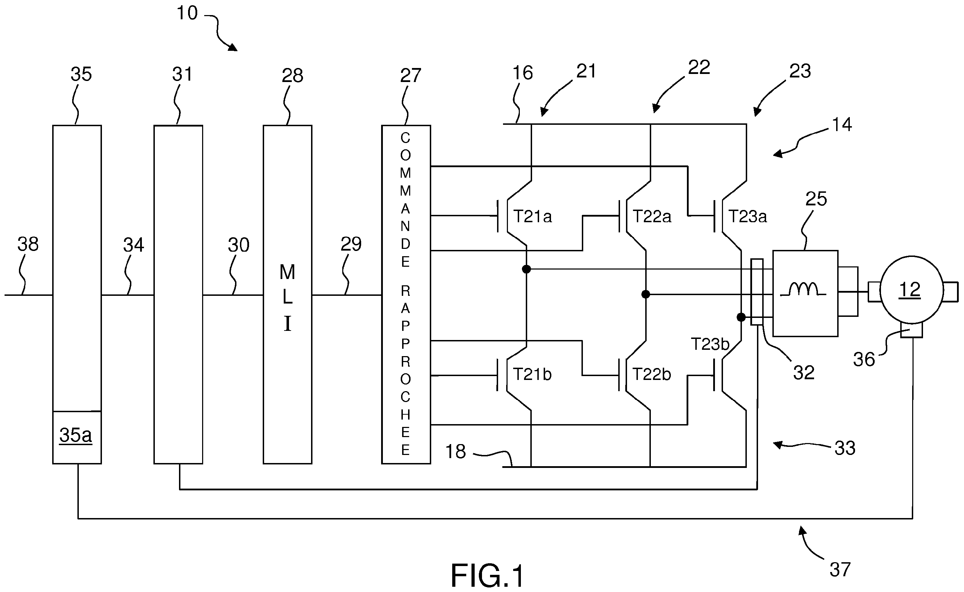

La figure 1 représente une architecture électrique 10 permettant d'alimenter une charge, comme par exemple un moteur électrique 12. Le moteur électrique nécessite une alimentation triphasée fournie par un onduleur 14. Tout autre type de charge électrique alimentée en courant alternatif peut être mise en oeuvre dans le cadre de l'invention. Dans l'exemple représenté sur la figure 1, l'onduleur 14 produit les trois phases nécessaires à l'alimentation de la charge. L'invention peut être mise en oeuvre pour tout type d'onduleur quel que soit le nombre de phases qu'il délivre.

L'onduleur 14 prélève de l'énergie électrique entre deux bornes 16 et 18 d'un réseau continu. A bord d'aéronefs, on peut trouver un réseau 540V continu permettant d'alimenter l'onduleur 14. Ce type de réseau est appelé HVDC pour son acronyme anglo-saxon : « High Voltage Direct Current ». Toute autre tension continue peut également être mise en oeuvre dans le cadre de l'invention.

L'onduleur 14 comprend trois branches 21, 22 et 23, chacune produisant une des phases de sortie de l'onduleur 14. Chaque branche comprend deux interrupteurs électroniques connectés en série entre les bornes de 16 et 18 du réseau continu : T21a et T21b pour la branche 21, T22a et T22b pour la branche 22 et T23a et T23b pour la branche 23. Comme évoqué plus haut, différents types d'interrupteurs peuvent être mis en oeuvre dans l'onduleur 14 tels que par exemple des MOS-FET ou des IGBT. Pour chaque branche, la phase correspondante est produite au point commun des deux interrupteurs de la branche. Des diodes de roue libre, non représentées sur la figure, peuvent être connectées en parallèle de chaque interrupteur. Un module de filtrage 25 peut être connecté entre la sortie de l'onduleur 14 et la charge 12. Le module de filtrage 25 peut comprendre des inductances permettant réduire les perturbations de mode commun et différentielles éventuellement présentes sur les différentes phases.

Associé à l'onduleur 14, l'architecture 10 comprend un module 27 de commande des interrupteurs, souvent appelé commande rapprochée. La commande rapprochée 27 est directement connectée aux grilles des interrupteurs électroniques. La commande rapprochée 27 génère des signaux adaptés aux interrupteurs à partir d'ordres binaires. Les ordres binaires sont généralement des signaux carrés à deux niveaux, un des niveaux correspond à l'état ouvert de l'interrupteur et l'autre niveau correspond à l'état fermé de l'interrupteur correspondant. La commande rapprochée 27 réalise une adaptation de courant et de tension des ordres binaires pour générer des signaux adaptés aux interrupteurs. La commande rapprochée 27 ne gère pas les durées pendant lesquelles les interrupteurs restent ouverts ou fermés. La commande rapprochée 27 permet tout au plus d'adapter la durée de passage d'un état à l'autre afin de réduire les interférences tout en limitant les pertes par commutation. La commande rapprochée 27 peut également intégrer un circuit de protection des interrupteurs. La commande rapprochée 27 est située à proximité immédiate de l'onduleur 14 afin d'éviter que des inductances n'apparaissent dans les conducteurs la reliant aux différents interrupteurs. En effet la présence d'inductance pourrait dégrader les signaux émis par la commande rapprochée 27. De telles commandes rapprochées sont par exemple disponibles dans le commerce. Un exemple est la commande référencée : CGD15HB62LP et proposé par la société CREE dont le siège est situé aux Etats Unis d'Amérique : 4600 Silicon Drive Durham, North Carolina, 27703.

Le temps de réponse de la commande rapprochée est de l'ordre de 0,1µs.

En amont de la commande rapprochée 27, l'architecture 10 comprend un modulateur de largeur d'impulsions 28 délivrant à la commande rapprochée 27 des ordres binaires 29 d'ouverture et de fermeture des interrupteurs électroniques de l'onduleur 14. Le modulateur de largeur d'impulsions 28 détermine les ordres binaires 29 en fonction d'un rapport cyclique 30 qu'il reçoit. Le rapport cyclique 30 est une image de la tension avec laquelle la charge 12 est alimentée. Le rapport cyclique 30 peut s'apparenter à une consigne de fonctionnement de l'onduleur 14. Le rapport cyclique 30 est par exemple de forme sinusoïdale. Pour déterminer des ordres binaires 29 à deux états, le modulateur 28 réalise par exemple une comparaison du rapport cyclique 30 avec un signal triangulaire qui peut être généré par le modulateur 28 lui-même ou par un générateur extérieur. Lorsque le rapport cyclique 30 est supérieur au signal triangulaire, l'ordre binaire 29 est dans un état haut et lorsque le rapport cyclique 30 est inférieur au signal triangulaire, l'ordre binaire 29 est dans un état bas. Il est bien entendu possible de mettre en oeuvre d'autres méthodes pour définir les ordres binaires 29 à partir du rapport cyclique 30.

Le temps de réponse du modulateur de largeur d'impulsions 28 est de l'ordre de 1µs.

En amont du modulateur de largeur d'impulsions 28, l'architecture 10 comprend un module 31 d'asservissement de l'onduleur 14 en courant. Un capteur de courant 32 mesure le courant de sortie de l'onduleur 14. Le capteur de courant 32 peut réaliser sa mesure sur l'une des trois phases ou sur les trois phases simultanément. Le capteur de courant 32 peut réaliser ses mesures directement en sortie des branches 21, 22 et 23 de l'onduleur 14 ou en aval du module de filtrage 25. Le module 31 et le capteur 32 forment une boucle d'asservissement 33 appelée boucle de courant recevant une consigne en courant 34. La boucle de courant 33 modifie le rapport cyclique 30 pour que le courant délivré par l'onduleur 14 suive la consigne en courant 34.

Le temps de réponse du module 31 d'asservissement de l'onduleur 14 en courant est de l'ordre de 10µs.

En amont du module 31, l'architecture 10 comprend un module 35 d'asservissement du fonctionnement de la charge 12. Un capteur de fonctionnement 36 mesure un paramètre caractéristique du fonctionnement de la charge 12. Il peut s'agir de la vitesse de rotation d'un moteur ou du couple qu'il délivre. Il peut s'agir de tout autre paramètre physique tel qu'une pression, une température... Le module 35 et le capteur 36 forment une boucle d'asservissement appelée boucle de charge 37 recevant une consigne 38 de fonctionnement de la charge 12. La boucle de charge 37 modifie la consigne en courant 34 pour que le paramètre caractéristique du fonctionnement de la charge 12 suive la consigne 38 de fonctionnement de la charge 12.

Le temps de réponse du module 31 d'asservissement du module 35 d'asservissement du fonctionnement de la charge 12 est de l'ordre de 10µs.

Il est possible de se passer de la boucle de courant 33. Le module 35 délivre alors directement le rapport cyclique 30.

L'invention vise à mutualiser tout ou partie de l'équipement de pilotage de l'onduleur 14. Autrement dit, avec un seul module regroupant différentes fonctions amonts à l'onduleur, il est possible de piloter plusieurs onduleurs indépendants. Comme annoncé plus haut, les onduleurs assurent une transformation d'une énergie présente sous forme d'un courant continu en une énergie présente sous forme d'un courant alternatif. L'onduleur 14 décrit sur la figure 1 est présenté sous forme sommaire. Dans le cadre de l'invention, les onduleurs peuvent rentrer dans des convertisseurs plus complexes. Par exemple, plusieurs onduleurs couplés peuvent fonctionner en parallèle pour alimenter une même charge.

Les convertisseurs peuvent être monodirectionnels, du réseau continu vers la charge fonctionnant en alternatif, ou réversibles, c'est-à-dire permettant un échange d'énergie dans les deux sens entre une charge pouvant être régénérative et un réseau. A titre d'exemple une batterie est à la fois une charge consommatrice d'énergie lorsque le réseau la recharge et une source produisant de l'énergie lorsque elle alimente le réseau.

A bord d'un avion, de nombreuses charges sont présentes et toutes ne fonctionnement pas en permanence. Certaines charges fonctionnement même pendant des durées très faibles en comparaison de la durée d'une mission. A titre d'exemple on peut citer l'excitatrice associée à la machine électrique destinée à faire démarrer les moteurs principaux de l'avion. Celle-ci ne fonctionne qu'un bref instant avant le décollage. On peut également citer les freins électriques qui ne fonctionnent que durant l'atterrissage pour ralentir l'avion roulant sur la piste. Par ailleurs, certaines charges fonctionnent quasiment en continu telle que par exemple le système de climatisation de la cabine. Cependant le système de climatisation peut être délesté pendant des cours instants sans que cela soit préjudiciable au confort des occupants de l'avion. Il est donc possible de mutualiser certains équipements associés aux charges électriques citées plus haut. Il est par exemple possible de mutualiser le pilotage des convertisseurs alimentant les excitatrices des démarreurs, le système de climatisation et les freins électriques. Il est possible de prévoir un fonctionnement des équipements de pilotage mutualisé de façon séquentielle, pour une charge puis pour une autre. Alternativement, il est possible de les faire fonctionner en parallèle simultanément pour deux charges indépendantes.

L'onduleur 14 doit être compris comme un bloc fonctionnel comprenant des interrupteurs électroniques pilotés permettant une conversion continu-alternatif. Le pilotage des interrupteurs peut aussi permettre à l'onduleur d'autres modes de fonctionnement, notamment réversibles. L'onduleur peut être piloté pour abaisser la tension ou pour l'augmenter. A cet effet, des lois de commande particulières peuvent être stockées dans l'équipement de pilotage de l'onduleur 14. Ces lois de commande sont stockées dans une mémoire 35a de l'équipement de pilotage et l'équipement choisit la loi de pilotage à mettre en oeuvre en fonction de l'onduleur à piloter. La mémoire 35a peut appartenir au module 35 d'asservissement du fonctionnement. Par exemple, la charge 12 peut être un moteur électrique nécessitant une courbe particulière couple/vitesse pour le faire démarrer. A bord d'un avion, les moteurs principaux et le groupe auxiliaire de puissance, connu sous le nom d'APU pour son acronyme anglo-saxon : « Auxiliary Power Unit », sont démarrés par un moteur électrique nécessitant une courbe particulière couple/vitesse qu'il est donc avantageux de stocker dans la mémoire 35a.

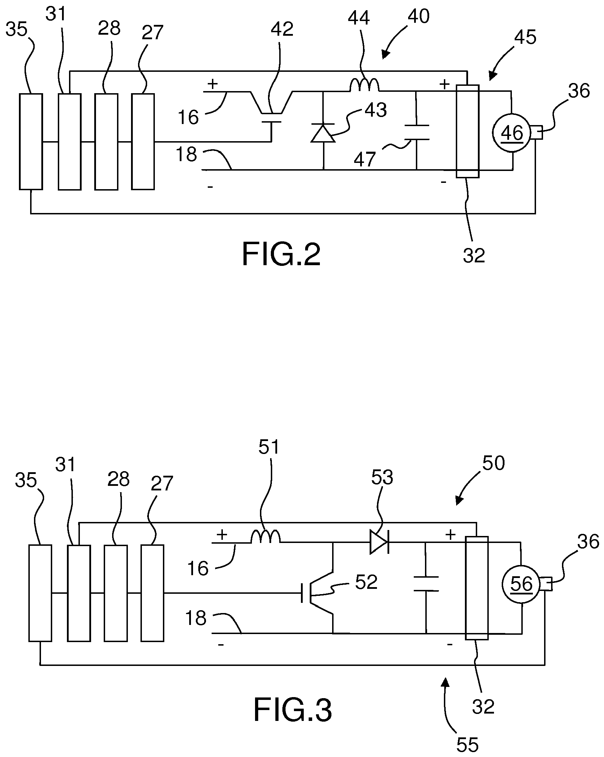

Les figures 2 et 3 représentent deux convertisseurs continu continu et leur équipement de pilotage respectif. La figure 2 représente un convertisseur 40 continu continu fonctionnant en abaisseur de tension. Le convertisseur 40 reçoit de l'énergie d'un réseau continu représenté par ses deux bornes 16 et 18 comme pour l'onduleur 14. Le convertisseur 40 comprend un interrupteur 42 et une diode 43 reliés en série entre les bornes 16 et 18. Une inductance 44 est raccordée au point commun de l'interrupteur 42 et de la diode 43. L'autre borne de l'inductance 44 forme la borne positive d'un réseau de sortie 45 alimentant une charge 46. La borne négative du réseau de sortie 45 est commune avec la borne 18 du réseau continu d'entrée. Un condensateur de filtrage 47 peut être connecté entre les deux bornes du réseau de sortie 45.

A bord d'un avion, ce type de convertisseur peut par exemple être mis en oeuvre pour charger une batterie 28V à partir d'un réseau HVDC 540V.

L'interrupteur 42 est piloté par une commande rapprochée 27 telle que décrite plus haut. On retrouve également un modulateur de largeur d'impulsions 28, un module d'asservissement en courant 31 associé à un capteur de courant 32 mesurant le courant de sortie sur le réseau 45 ainsi qu'un module d'asservissement 35 associé à un capteur de fonctionnement 36 mesurant un paramètre caractéristique du fonctionnement de la charge 46.

La figure 3 représente un convertisseur 50 continu continu fonctionnant en élévateur de tension. Le convertisseur 50 reçoit également de l'énergie d'un réseau continu représenté par ses deux bornes 16 et 18. Le convertisseur 50 comprend une inductance 51 et un interrupteur 52 reliés en série entre les bornes 16 et 18. Une diode 53 est raccordée par son anode au point commun de l'inductance 51 et de l'interrupteur 42. La cathode de la diode 53 forme la borne positive d'un réseau de sortie 55 alimentant une charge 56. La borne négative du réseau de sortie 55 est commune avec la borne 18 du réseau continu d'entrée. Un condensateur de filtrage 57 peut être connecté entre les deux bornes du réseau 55.

A bord d'un avion, ce type de convertisseur peut par exemple être mis en oeuvre pour alimenter un réseau HVDC 540V à partir d'une batterie 28V.

Comme sur les figures 1 et 2, on retrouve associé au convertisseur 50, un modulateur de largeur d'impulsions 28, un module d'asservissement en courant 31 associé à un capteur de courant 32 mesurant le courant de sortie sur le réseau 55 ainsi qu'un module d'asservissement 35 associé à un capteur de fonctionnement 36 mesurant un paramètre caractéristique du fonctionnement de la charge 56.

Comme pour l'onduleur 14, les convertisseurs 40 et 50 sont présentés de façon simplifiée. Tout type de convertisseur peut mettre en oeuvre l'invention, dès lors qu'il possède au moins un interrupteur piloté de façon cyclique. De façon plus générale, le terme « convertisseur » doit être entendu dans son acceptation la plus large, c'est-à-dire tout type de circuit électronique comprenant au moins un interrupteur piloté de façon cyclique. Les convertisseurs 14, 40 et 50 sont dit « non isolés ». Ils ne possèdent pas d'isolement galvanique entre le réseau d'entrée et le réseau de sortie.

L'invention peut aussi être mise en oeuvre pour des convertisseurs possédant une isolation galvanique, par exemple assurée au moyen d'un transformateur. A titre d'exemple, la demande de brevet FR 3 050 882 A1, déposée au nom de la demanderesse, décrit un convertisseur continu continu réversible assurant à la fois la charge de batterie et sa décharge pour assurer l'alimentation du réseau HVDC. Ces convertisseurs fonctionnent en abaisseur de tension pour charger la batterie et en élévateur pour alimenter le réseau HVDC. Ce type de convertisseur est connu dans la littérature anglo-saxonne sous le nom de BBCU pour son acronyme (Buck Boost Converter Unit). Le convertisseur décrit dans le document FR 3 050 882 A1 comprend un onduleur, un transformateur et un redresseur statique à interrupteurs pilotés. L'invention peut être mise en oeuvre aussi bien pour l'onduleur que pour le redresseur statique.

Pour charger une batterie, il est possible de l'alimenter en permanence avec une tension supérieure à celle qu'elle est susceptible de délivrer. Cependant, il est préférable de prévoir une courbe de charge en fonction du temps adaptée à la technologie de la batterie. Cette courbe de charge est avantageusement stockée dans la mémoire 35a.

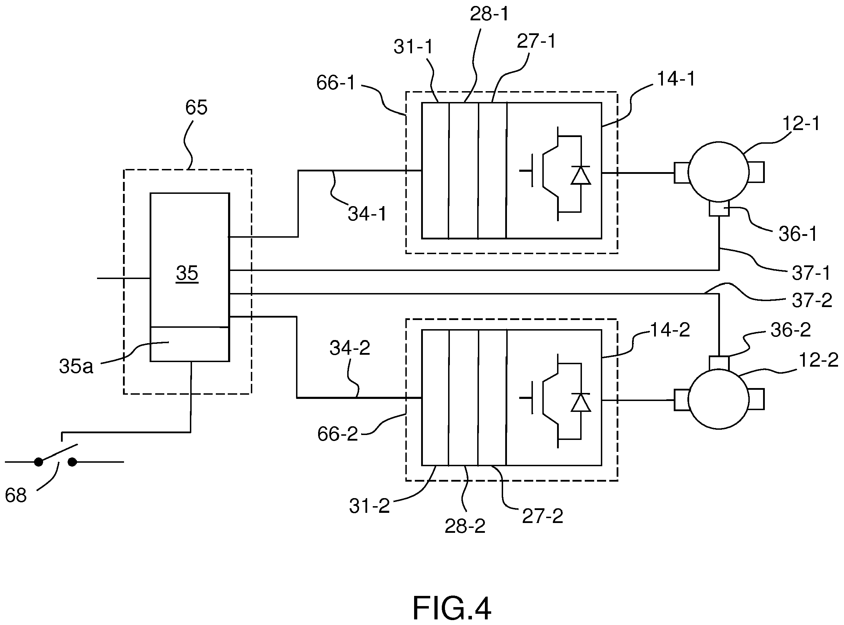

La figure 4 représente un premier mode de réalisation de l'invention permettant une mutualisation du module 35. Sur la figure 4, deux charges 12-1 et 12-2 sont alimentées chacune par un onduleur, respectivement 14-1 et 14-2 semblable à l'onduleur 14 décrit plus haut à l'aide de la figure 1. Il est bien entendu que ce mode de réalisation peut également être mis en oeuvre pour tout type de convertisseur notamment ceux représentés sur les figures 2 et 3. Associé à chaque onduleur on retrouve une commande rapprochée respectivement 27-1 et 27-2, un modulateur de largeur d'impulsions respectivement 28-1 et 28-2, et une boucle de courant représentée ici par son module d'asservissement en courant respectivement 31-1 et 31-2. Les commandes rapprochées 27-1 et 27-2 sont semblables à la commande 27, les modulateurs 28-1 et 28-2 sont semblables au modulateur 28 et les boucles de courant sont semblables à la boucle de courant 37. Dans le mode de réalisation de la figure 4, le module d'asservissement 35 est commun aux deux charges 12-1 et 12-2. Associé à chacune des charges 12-1 et 12-2, on retrouve un capteur de fonctionnement, respectivement 36-1 et 36-2, semblable au capteur 36 décrit plus haut et mesurant chacun un paramètre caractéristique du fonctionnement de la charge à laquelle le capteur est associé. Deux boucles de charge 37-1 et 37-2, semblables à la boucle 37, sont présentes. Le module 35 appartient aux deux boucles de charge 37-1 et 37-2. Le mode de réalisation de la figure 4 peut être mis en oeuvre pour plus de deux onduleurs, toujours avec un module 35 commun aux différents onduleurs. Le module 35 peut comporter différentes lois de commande adaptées au fonctionnement de chacun des onduleurs 14-1 et 14-2. Il est également possible de proposer plusieurs lois de commande pour un même onduleur, notamment, lorsque celui-ci est destiné à fonctionner de façon réversible.

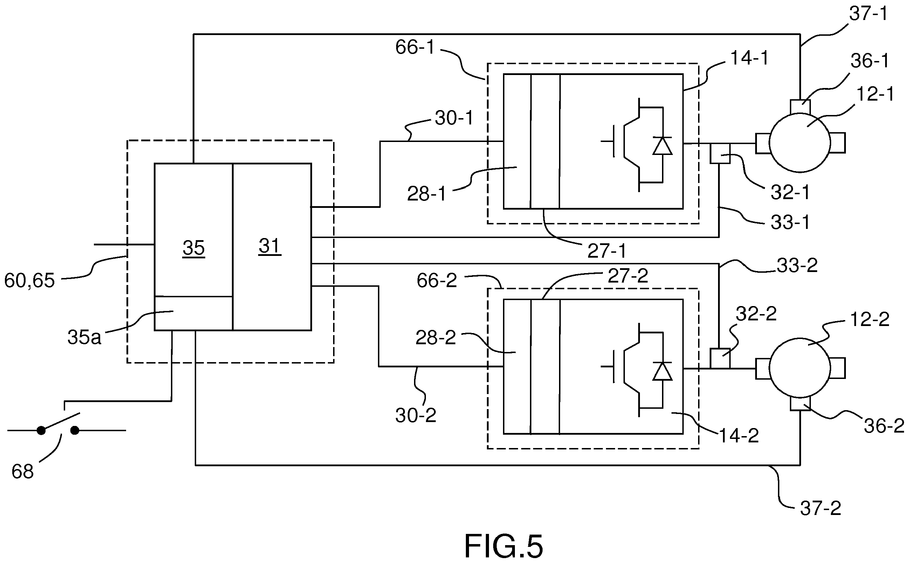

La figure 5 représente un deuxième mode de réalisation de l'invention permettant une mutualisation des modules 31 et 35 regroupés dans un module de pilotage 60 commun aux deux onduleurs 14-1 et 14-2. Comme pour la figure 4, dans le mode de réalisation de la figure 5, le module de pilotage 60 peut être commun à un plus grand nombre d'onduleurs. Associés à chaque onduleur 14-1 et 14-2, on retrouve les commandes rapprochées 27-1 et 27-2 et les modulateurs de largeur d'impulsions 28-1 et 28-2. Dans le mode de réalisation de la figure 5, deux boucles de courant 33-1 et 33-2 semblables à la boucle 33 sont présentes. Chaque boucle de courant 33-1 et 33-2 comprend un capteur de courant, respectivement 32-1 et 32-2, semblable au capteur 32 décrit plus haut. Le module 31 est commun aux deux boucles de courant 33-1 et 33-2. On retrouve également les boucles de charges 37-1 et 37-2 et le module 35 appartenant à ces deux boucles.

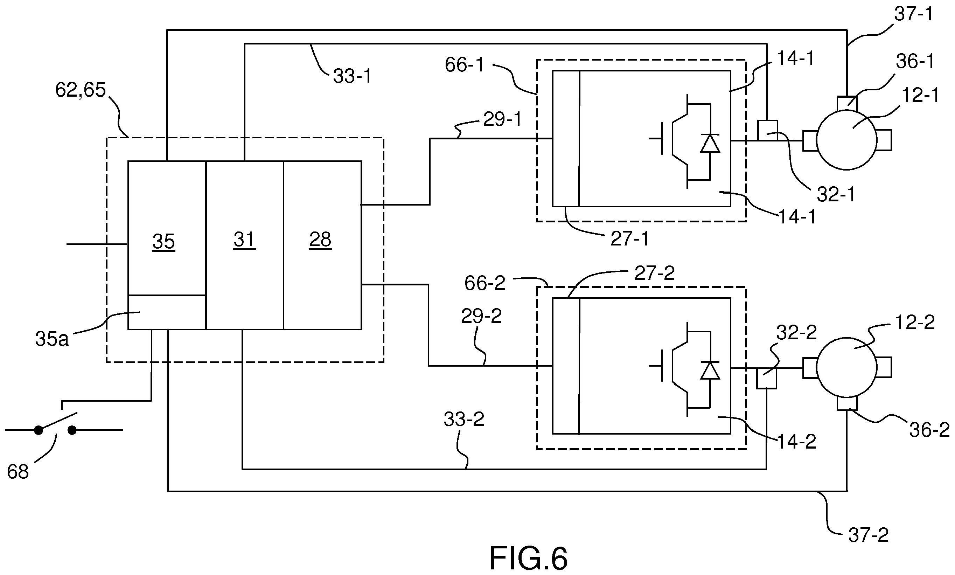

La figure 6 représente un troisième mode de réalisation de l'invention dans lequel un module de pilotage 62 comprend les modules 31 et 35 ainsi qu'un modulateur de largeur d'impulsions 28 commun aux différents onduleurs 14-1 et 14-2. Comme précédemment, deux onduleurs 14-1 et 14-2 sont représentés. Il est bien entendu que le module de pilotage 62 peut être commun à un plus grand nombre d'onduleurs. Les commandes rapprochées 27-1 et 27-2 restent associées à chacun des onduleurs 14-1 et 14-2.

Le module de pilotage 62 peut être éloigné des commandes rapprochées 27-1 et 27-2. Les liaisons portant les ordres binaires provenant du modulateur 28 vers les commandes rapprochées 27-1 et 27-2 sont ici repérées respectivement 29-1 et 29-2. L'éloignement du module de pilotage 62 par rapport aux onduleurs 14-1 et 14-2 et à leur commande rapprochée 27-1 et 27-2 permet de séparer spatialement la partie puissance de l'architecture électrique de la partie commande. De façon plus précise, l'éloignement permet de séparer d'une part le module commun aux différents convertisseurs et d'autre part les convertisseurs eux-mêmes associés chacun à leur commande rapprochée et éventuellement aux modules 27-1, 27-2, 28-1 et 28-2 Une barrière physique peut être prévue pour séparer la partie puissance de l'architecture électrique de la partie commande. Il est par exemple possible de disposer le module commun aux différents convertisseurs dans un boitier 65. Les convertisseurs associés chacun à leur commande rapprochée et éventuellement les modules 27-1, 27-2, 28-1 et 28-2, sont alors disposés chacun dans un boitier, respectivement 66-1 et 66-2 distinct de celui réservé au module commun. Ainsi en cas de dysfonctionnement thermique, mécanique ou électrique de la partie puissance, la probabilité que le dysfonctionnement se propage à la partie commande est fortement réduite. L'éloignement présente également un intérêt dans les modes de réalisation des figures 4 et 5. Dans le mode de réalisation de la figure 4 les modules 27-1, 28-1 et 31-1 restent disposés au voisinage de l'onduleur 14-1 et le module 35 est éloigné des modules 27-1, 28-1 et 31-1. Il en est de même pour les modules 27-2, 28-2 et 31-2 qui sont éloignés du module 35. Dans le mode de réalisation de la figure 5, le module de pilotage 60 est éloigné des onduleurs et des modules 27-1 et 28-1 d'une part et 27-2 et 28-2 d'autre part.

A bord d'un avion, il est par exemple possible de disposer les onduleurs et leur commande rapprochée au plus près des charges, par exemple dans des zones non pressurisées et de disposer le module de pilotage 35 ou 60 ou 62 dans une zone pressurisée. Ainsi les contraintes environnementales que doit supporter le module de pilotage sont moins sévères que si ce module est disposé au voisinage de la charge, c'est-à-dire en zone non pressurisée.

Dans le mode de réalisation de la figure 6, les liaisons 29-1 et 29-2 peuvent comprendre des fibres optiques. Les fibres optiques assurent une isolation galvanique de chacun des onduleurs 14-1 et 14-2 et de sa commande rapprochée, respectivement 27-1 et 27-2 par rapport au module de pilotage 62.

Comme pour le premier mode de réalisation, le deuxième et le troisième mode de réalisation peuvent également être mis en oeuvre pour tout type de convertisseur notamment ceux représentés sur les figures 2 et 3.

Dans les trois modes de réalisation des figures 4 à 6, les modules 35, 60 et 62 sont destinés à piloter des convertisseurs de façon indépendante. Pour ce faire le module commun aux différents convertisseurs comprend un système d'exploitation temps réel assurant une ségrégation de canaux associés à chacun des convertisseurs. Appliqué au domaine aéronautique, le système d'exploitation respecte avantageusement la norme DO 297.

A bord d'un avion, à chacun des moteurs est associé un générateur principal assurant l'essentiel de la fourniture d'énergie électrique lorsque l'avion est en vol. A chacun des générateurs est associé un dispositif de contrôle connu sous le nom de GCU pour son acronyme anglo-saxon : « Generator Control Unit ». Le GCU fonctionne tout au long de la mission de l'avion dès que ses moteurs sont en fonctionnement. Le GCU est principalement formé par une excitatrice pilotée par un convertisseur statique pour lequel l'invention peut être mise en oeuvre. Le GCU peut également comprendre des contacteurs de ligne permettant de raccorder ou d'isoler le générateur du réseau électrique de bord. Bien que ne fonctionnant pas de façon cyclique comme les interrupteurs d'un convertisseur, les contacteurs du GCU peuvent être pilotés par le module 35 associé au convertisseur du GCU. Tout autre contacteur 68 peut être piloté par le module 35.

De façon plus générale, le module 35 peut piloter tout type de de contacteur, qu'il fonctionne de façon cyclique ou non. A titre d'exemple, à bord d'un avion il est courant de disposer d'un organe de contrôle des réseaux de puissance. Cet organe est connu sous le nom de BPCU pour son acronyme anglo-saxon : « Bus Power Control Unit ». Le BPCU permet notamment de connecter ou de déconnecter un des réseaux de puissance de l'avion. Un module 35 peut piloter les contacteurs du BPCU. A bord d'un avion, il est important de s'assurer du bon fonctionnement de ces contacteurs. Des auxiliaires appartenant au BPCU peuvent surveiller l'état ouvert ou fermé des contacteurs. Cette surveillance peut être mémorisée, par exemple dans la mémoire 35a du module 35 pilotant le contacteur.

De façon plus générale, la mémoire 35a peut être utilisée pour stocker d'autres informations, notamment des données de fonctionnement des interrupteurs pilotés et même de la charge associée. Ces données peuvent être stockées sous forme de table tournante en écrasant les données les plus anciennes.

## Revendications

1. Une architecture électrique, comprenant :
• plusieurs convertisseurs pouvant fonctionner indépendamment les uns des autres, chaque convertisseur étant destiné à alimenter une charge,
• associé à chaque couple convertisseur/charge : une boucle de charge, comprenant au moins un capteur mesurant un paramètre caractéristique du fonctionnement de la charge, un module d'asservissement de fonctionnement, recevant une consigne de fonctionnement de la charge et une information provenant du capteur de fonctionnement, le module d'asservissement de fonctionnement asservissant une consigne en courant du convertisseur considéré pour que l'information issue du capteur de fonctionnement suive la consigne de fonctionnement,
• associée à chaque convertisseur : une boucle de courant, comprenant au moins un capteur de courant mesurant un courant de sortie du convertisseur considéré, un module d'asservissement en courant, recevant la consigne en courant et une information provenant du capteur de courant et délivrant un rapport cyclique d'ouverture et de fermeture d'interrupteurs électroniques appartenant au convertisseur considéré, le module d'asservissement en courant asservissant le rapport cyclique pour qu'une information issue du capteur de courant suive la consigne en courant,
l'architecture électrique comprenant en outre un module de pilotage commun à tous les convertisseurs et comprenant les modules d'asservissement de fonctionnement et les modules d'asservissement en courant de tous les convertisseurs.

2. L'architecture électrique selon la revendication 1, **caractérisée en ce que** le module d'asservissement de fonctionnement comprend une mémoire permettant de stocker plusieurs lois de commande, chacune adaptée au fonctionnement de l'un des convertisseurs.

3. L'architecture électrique selon la revendication 2, dans laquelle la mémoire est configurée pour stocker une courbe de charge adaptée à une batterie formant la charge associée au convertisseur.

4. L'architecture électrique selon la revendication 2, dans laquelle la mémoire est configurée pour stocker une courbe couple/vitesse adaptée à démarrer un moteur électrique formant la charge associée au convertisseur.

5. L'architecture électrique selon la revendication 2, dans laquelle la mémoire est configurée pour stocker des données de fonctionnement d'interrupteurs pilotés et/ou de la charge associée.

6. L'architecture électrique selon la revendication 1, dans laquelle le module commun aux différents convertisseurs comprend un système d'exploitation temps réel assurant une ségrégation de canaux associés à chacun des convertisseurs.

7. L'architecture électrique selon la revendication 1, comprenant en outre un modulateur de largeur d'impulsions commun aux convertisseurs, recevant un rapport cyclique et délivrant aux convertisseurs des ordres binaires d'ouverture et de fermeture d'interrupteurs électroniques des différents convertisseurs, et dans laquelle le module de pilotage commun aux convertisseurs comprend en outre le modulateur de largeur d'impulsions.

8. L'architecture électrique selon la revendication 7, comprenant en outre, associé à chaque convertisseur, un module de commande des interrupteurs, appelé commande rapprochée, recevant les ordres binaires et réalisant une adaptation de courant et de tension des ordres binaires pour générer des signaux adaptés aux interrupteurs.

9. L'architecture électrique selon la revendication 8, dans laquelle une liaison reliant le module de pilotage et les commandes rapprochées est assurée au moyen de fibres optiques.

10. L'architecture électrique selon l'une des revendications précédentes, dans laquelle le module de pilotage commun à tous les convertisseurs est disposé dans un boitier, et dans laquelle les convertisseurs sont disposés chacun dans un boitier distinct du boitier contenant le module d'asservissement de fonctionnement.

11. L'architecture électrique selon la revendication 1, comprenant en outre au moins un contacteur distinct des convertisseurs, et dans laquelle le module d'asservissement de fonctionnement pilote le contacteur.

12. Un aéronef, comprenant une architecture électrique selon la revendication 1, dans lequel le module de pilotage commun à tous les convertisseurs est disposé dans une zone pressurisée de l'aéronef et dans lequel au moins un des convertisseurs est disposé dans une zone non pressurisée de l'aéronef.
